# EUROPEAN PATENT APPLICATION

(11) **EP 4 691 988 A1**
(43) Date of publication of application: **11.02.2026**
(21) Application number: 24779621.2
(22) Date of filing: 18.03.2024
(51) Int. Cl.: C01C 1/18, B01D 53/56, B01D 53/78, C04B 7/44

(54) **METHOD FOR PRODUCING AMMONIUM NITRATE USING NITROGEN DIOXIDE IN CEMENT EXHAUST GAS**

(30) Priority: 28.03.2023 JP 2023050759
(71) Applicant: Sumitomo Osaka Cement Co., Ltd., Tokyo, 105-8641 (JP)
(72) Inventor: SASAKI, Shohei, Tokyo 105-8641 (JP)
(74) Representative: Sonnenberg Harrison Partnerschaft mbB
(86) International application number: PCT/JP2024/010413
(87) International publication number: WO 2024/203496

(57) **Abstract**

A method for producing ammonium nitrate includes a nitrogen dioxide recovery step of bringing nitrogen dioxide in a cement exhaust gas into contact with water to obtain an NOx-containing solution, a reduction reaction step of producing ammonia by bringing a reducing catalyst into contact with the NOx-containing solution, an ammonia recovery step of vaporizing the ammonia with a waste heat gas, a solid-liquid separation step of separating a residue after the ammonia recovery into iron hydroxide and an unused residue of NOx, a neutralization step of bringing the separated nitrate/nitrite nitrogen-containing solution and the NOx-containing solution into contact with the ammonia vaporized and recovered to prepare ammonium nitrate, and a catalyst production step in which magnetite used in the reduction reaction step is obtained by reacting iron sulfate with a sodium hydroxide aqueous solution and separating the mixture into solid and liquid, the sodium sulfate aqueous solution in the solid-liquid separation is separated into sodium hydroxide and sulfuric acid by electrodialysis, and the sodium hydroxide is used in a circulatory manner for preparing the magnetite, where the nitrogen dioxide in the cement exhaust gas is treated simply and efficiently while reducing environmental burden.

## Description

### Technical Field

The present invention relates to a method for producing ammonium nitrate using nitrogen dioxide in a cement exhaust gas; and particularly relates to a method for producing ammonium nitrate using nitrogen dioxide in a cement exhaust gas, in which nitrogen dioxide produced in a cement plant is recovered with high efficiency, and thus it is possible to simply and effectively reduce environmental burden, and environmental burden can be suppressed in preparation of a catalyst used in the process of preparing the ammonium nitrate.

### Background

In general, in cement manufacturing, exhaust gas generated by combustion of coal, heavy oil, or recycled fuel is used for drying a cement raw material, and then dust contained in the exhaust gas is recovered in a dust collection step and discharged to the outside of the system.

In the exhaust gas discharged to the outside of the system, in addition to carbon dioxide and a trace amount of chloride, a large amount of nitrogen oxides (hereinafter, referred to as "NOx") due to the combustion of fuel or the like is also contained, and the NOx has an adverse effect on environmental burden of acid rain or the like and on the human body such as respiratory system.

In consideration of such problems, it has been proposed to reduce an NOx emission amount in a cement plant by selecting a fuel having a small nitrogen component or by NOx emission regulations using a denitration agent.

As a denitrification technique for the NOx in a cement plant, Japanese Patent No. 5100432 (Patent Literature No. 1) proposes an SCR method using urea or alcohol, and specifically proposes a method for treating exhaust gas, which is a method of denitrifying exhaust gas by bringing an exhaust gas containing nitrogen oxides into contact with a denitration agent, in which a denitration agent obtained by mixing urea with one or two or more kinds of waste liquids selected from the group consisting of a water-soluble waste liquid containing oil, a waste liquid produced by washing ash with water, a waste liquid containing alcohols, and a waste liquid generated in a cement or concrete plant is used as the denitration agent, and a type of the waste liquid and a mass proportion of the waste liquid to urea are determined to satisfy specific conditions.

However, in such a method, since the optimum temperature of the denitration reaction is 800°C or higher, heat gas which has passed through a urea spray zone is not denitrated, and thus it can be presumed that approximately 400 ppm of the NOx is emitted into the atmosphere.

In addition, Japanese Laid-open Patent Publication No. 2003-175315 (Patent Literature No. 2) proposes a nitrogen oxide absorbent which absorbs nitrogen oxides in a high-temperature gas containing oxygen and nitrogen oxides, the nitrogen oxide absorbent containing a mixture of an oxide or hydroxide of an alkaline earth element and an oxide of a transition element, in which the alkaline earth element is barium (Ba) and/or strontium (Sr) and the transition element is copper (Cu) and/or iron (Fe).

Furthermore, Japanese Patent No. 5963405 (Patent Literature No. 3) discloses a method for denitrifying a gas to be treated, containing NOx which is a gas component to be treated, in which an NOx component is oxidized with ozone, the NOx component in the gas to be treated after the ozone oxidation is brought into contact with an absorption solution to generate nitrous acid, and the nitrous acid is converted to suppress or prevent the NOx in a gas phase generated by the conversion. In the denitrification method, a molar ratio of ozone supplied to the gas component to be treated is in a range of 0.1 to 2 times, ozone having a concentration of 1 ppm or more and equal to or less than a saturation concentration is added in advance to the absorption solution in which the gas to be treated component is absorbed, the gas to be treated in which the ozone is supplied and the absorption solution to which the ozone is added are brought into contact with each other in a fibrous porous body having a gas-liquid separation function, and the gas-liquid separation is performed below the porous body.

The method of Patent Literature No. 2 in the related field is performed under a high-temperature gas condition (300°C to 600°C), and the application thereof in a cement plant is difficult to treat because dust is mixed in cement combustion exhaust gas.

In addition, the method of Patent Literature No. 3 in the related field is a method of recovering the NOx with water at normal temperature, but it is necessary to oxidize the recovered nitrous acid with ozone or the like, which makes the process complicated and costly, and it is difficult to introduce the method in an actual cement plant.

As described above, in the method of the related field, the denitration of NOx in the exhaust gas produced in the cement plant can be performed only in a limited temperature range, or the process is complicated, and thus the recovered NOx cannot be effectively reused. In addition, a method for producing ammonium nitrate, in which a sufficient reduction in environmental burden is achieved by using NOx in exhaust gas, is expected.

### Citation List

### Patent Literature

Patent Literature No. 1: Japanese Patent No. 5100432
Patent Literature No. 2: Japanese Laid-open Patent Publication No. 2003-175315
Patent Literature No. 3: Japanese Patent No. 5963405

### Summary of Invention

### Technical Problem

An object of the present invention is to provide a method for producing ammonium nitrate using nitrogen dioxide in a cement exhaust gas, which can solve the above-described problems, can carry out a denitrification treatment on the nitrogen dioxide in a waste gas generated during cement manufacturing in a cement plant in a simple and highly efficient manner, and can suppress emission of nitrogen dioxide into the atmosphere to reduce the environmental burden.

In addition, an object of the present invention is to a method of forming a circulation cycle which is suitable for a cement plant or the like and is excellent in reducing the environmental burden, in which the nitrogen dioxide in the cement exhaust gas is formed into ammonium nitrate by using waste heat gas discharged in a cement manufacturing process, and thus the environmental burden is reduced in a manufacturing process of a catalyst used in the manufacturing of ammonium nitrate and a residue obtained can be effectively used in cement manufacturing.

### Solution to Problem

(I) The method for producing ammonium nitrate using nitrogen dioxide in a cement exhaust gas according to the present invention includes:
   a nitrogen dioxide recovery step (1) of bringing nitrogen dioxide in a cement exhaust gas into contact with water and absorbing the nitrogen dioxide in the water to recover the nitrogen dioxide as a nitrate/nitrite nitrogen-containing solution;
   a reduction reaction step (2) of bringing reduced iron and magnetite into contact with all or a part of the nitrate/nitrite nitrogen-containing solution obtained in the nitrogen dioxide recovery step (1) under an acidic condition to produce iron hydroxide and ammonia;
   an ammonia recovery step (3) of distilling and vaporizing the ammonia produced in the reduction reaction step (2) using a waste heat gas from a cement manufacturing process to recover the ammonia;
   a solid-liquid separation step (4) of separating a residue after recovering the ammonia in the ammonia recovery step (3) into a solid and a liquid, and by which the residue is separated into the iron hydroxide of the reduction reaction step (2) which has passed through the ammonia recovery step (3), and unused nitrate/nitrite nitrogen-containing solution in the residue;
   a neutralization step (5) of bringing the nitrate/nitrite nitrogen-containing solution separated in the solid-liquid separation step (4) and the nitrate/nitrite nitrogen-containing solution, which is a remainder obtained in the nitrogen dioxide recovery step (1) and not introduced into the reduction reaction step (2), into contact with the ammonia vaporized and recovered in the ammonia recovery step (3) to prepare ammonium nitrate; and
   a catalyst production step (7) of preparing the magnetite used in the reduction reaction step (2) by reacting iron sulfate with a sodium hydroxide aqueous solution and then separating the produced magnetite and sodium sulfate aqueous solution into a solid and a liquid, separating the sodium sulfate aqueous solution by electrodialysis into sodium hydroxide and sulfuric acid, and using the obtained sodium hydroxide in a circulatory manner in the preparation of the magnetite by reacting the sodium hydroxide with the iron sulfate.
(II) In the method for producing ammonium nitrate using nitrogen dioxide in a cement exhaust gas according to (I) of the present invention, it is preferable that the sulfuric acid obtained in the catalyst production step (7) is used for the acidic condition in the reduction reaction step (2), and/or used in a circulatory manner by being reacted with an unreacted sodium hydroxide after the preparation of the magnetite to produce sodium sulfate, and the sodium sulfate is used in the electrodialysis together with the sodium sulfate aqueous solution subjected to the solid-liquid separation in the catalyst production step (7).
(III) In the method for producing ammonium nitrate using nitrogen dioxide in a cement exhaust gas according to (I) or (II) of the present invention, it is more preferable that hydrogen produced during the preparation of the magnetite in the catalyst production step (7) is used in a circulatory manner as a combustion raw material in cement manufacturing.
(IV) In the method for producing ammonium nitrate using nitrogen dioxide in a cement exhaust gas according to (I) or (II) of the present invention, it is more preferable that the method further includes a granulation step (6) of granulating the ammonium nitrate prepared in the neutralization step (5).
(V) In the method for producing ammonium nitrate using nitrogen dioxide in a cement exhaust gas according to (I) or (II) of the present invention, it is more preferable that the iron hydroxide separated in the solid-liquid separation step (4) is exposed to air to be iron oxide-hydroxide, and the iron oxide-hydroxide is used as a cement raw material.
(VI) In the method for producing ammonium nitrate using nitrogen dioxide in a cement exhaust gas according to (I) of the present invention, it is preferable that the ammonium nitrate prepared in the neutralization step (5) is contained in an ammonium nitrate- and nitrate/nitrite nitrogen-containing solution, the solution is heated and distilled at 170°C to 180°C using a waste heat gas to concentrate the ammonium nitrate, the remaining nitrate/nitrite nitrogen is vaporized and circulated in the neutralization step (5), a part of the ammonia vaporized in the ammonia recovery step (3) is added to the concentrated ammonium nitrate to be reacted with an unreacted nitrate/nitrite nitrogen mixed with the concentrated ammonium nitrate for improving a purity of the ammonium nitrate, and the high-purity ammonium nitrate is cooled to obtain crystallized ammonium nitrate.

### Advantageous Effects of Invention

By the method for producing ammonium nitrate according to the present invention, it is possible to efficiently denitrify nitrogen dioxide in exhaust gas discharged from a cement plant, and it is possible to create a circulation regeneration cycle which is environmentally excellent, in which the recovered nitrate/nitrite nitrogen can be subjected to a reduction treatment without being subjected to an oxidation treatment, and ammonium nitrate obtained as a final product can be effectively utilized as a blasting agent or the like in a limestone mine as a raw material for cement manufacturing.

In addition, the waste heat gas discharged in the cement manufacturing process can be used as a heat source for manufacturing magnetite which is a reducing catalyst, and for vaporizing ammonia, and thus the waste heat gas in the cement manufacturing process can also be effectively used.

Furthermore, it is possible to form a circulation cycle suitable for a cement plant or the like, which is excellent in reduction of environmental burden in manufacturing of a reducing catalyst used in the process of manufacturing ammonium nitrate, and the obtained residue can be effectively used in the manufacturing of cement.

### Brief Description Of Drawings

[FIG. 1] A flow diagram representing an example of an outline of a method for producing ammonium nitrate using nitrogen dioxide in a cement exhaust gas according to the present invention.
[FIG. 2] A schematic diagram of an example showing a catalyst production step (7) in FIG. 1.

### Description Of Embodiments

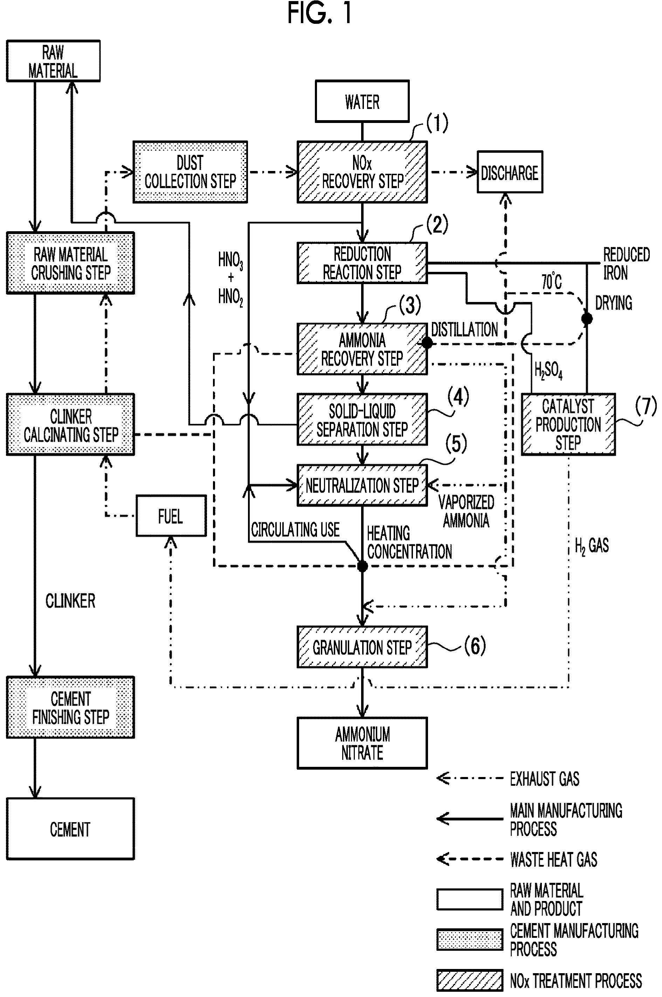

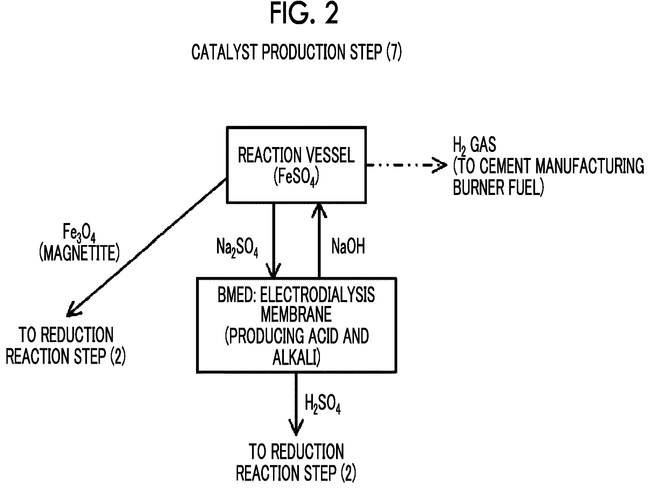

The present invention will be described below with reference to preferred examples in accordance with FIGS. 1 and 2, but the present invention is not limited thereto.

The method for producing ammonium nitrate using nitrogen dioxide in a cement exhaust gas according to the embodiment of the present invention includes:
a nitrogen dioxide recovery step (1) of bringing nitrogen dioxide in a cement exhaust gas into contact with water and absorbing the nitrogen dioxide in the water to recover the nitrogen dioxide as a nitrate/nitrite nitrogen-containing solution;
a reduction reaction step (2) of bringing reduced iron and magnetite into contact with all or a part of the nitrate/nitrite nitrogen-containing solution obtained in the nitrogen dioxide recovery step (1) under an acidic condition to produce iron hydroxide and ammonia;
an ammonia recovery step (3) of distilling and vaporizing the ammonia produced in the reduction reaction step (2) using a waste heat gas from a cement manufacturing process to recover the ammonia;
a solid-liquid separation step (4) of separating a residue after recovering the ammonia in the ammonia recovery step (3) into a solid and a liquid, and by which the residue is separated into the iron hydroxide of the reduction reaction step (2) which has passed through the ammonia recovery step (3), and unused nitrate/nitrite nitrogen-containing solution in the residue;
a neutralization step (5) of bringing the nitrate/nitrite nitrogen-containing solution separated in the solid-liquid separation step (4) and the nitrate/nitrite nitrogen-containing solution, which is a remainder obtained in the nitrogen dioxide recovery step (1) and not introduced into the reduction reaction step (2), into contact with the ammonia vaporized and recovered in the ammonia recovery step (3) to prepare ammonium nitrate; and
a catalyst production step (7) of preparing the magnetite used in the reduction reaction step (2) by reacting iron sulfate with a sodium hydroxide aqueous solution and then separating the produced magnetite and sodium sulfate aqueous solution into a solid and a liquid, separating the sodium sulfate aqueous solution by electrodialysis into sodium hydroxide and sulfuric acid, and using the obtained sodium hydroxide in a circulatory manner in the preparation of the magnetite by reacting the sodium hydroxide with the iron sulfate.

As shown in FIG. 1, in a cement plant, in order to manufacture cement, generally, a raw material crushing step of crushing each raw material, a clinker calcinating step of calcinating the crushed raw material to manufacture cement clinker, and a cement finishing step of crushing the cement clinker and mixing the crushed cement clinker with gypsum are performed to manufacture cement.

In order to manufacture the cement clinker, the cement clinker is manufactured by calcinating the cement raw material in a cement kiln by calcinating a fuel at a calcination temperature of approximately 1300°C to 1500°C.

As the fuel, from the viewpoint of effective utilization of waste, waste such as household waste, sewage sludge, waste acid or waste alkali, waste plastic, dried sludge, waste white clay, wood chips, regenerated oil, ASR, and PKS is used for combustion, and the obtained heat source is used as a heat source in a cement clinker calcinating step.

In addition, as the cement raw material, it is also possible to use, as a raw material, waste such as nitrogen-containing waste, for example, coal ash, general incineration ash, construction generated soil, burnt residue, sludge, foundry sand, steelmaking dust, and slow cooling slag.

Here, the exhaust gas is an exhaust gas or the like, discharged by calcinating the wastes, and means, for example, a gas containing a large amount of dust such as cement dust or CO₂, which is used in the clinker calcinating step.

The exhaust gas contains various dusts, and the dusts in the exhaust gas are collected by, for example, an electric dust collector and then the exhaust gas is cooled, for example, to approximately 30°C.

The amount of NOx in the cooled exhaust gas is, for example, 300 to 400 ppm. However, in the present invention, by recovering the NOx in the exhaust gas in the following NOx recovery step (1), for example, in a case where the amount of NOx contained in the exhaust gas before the NOx recovery step is 350 ppm, the amount of NOx contained in the exhaust air after the application of the NOx recovery step (1) can be reduced to 28 ppm.

With regard to an exhaust gas such as combustion gas, which has been discharged from a cement manufacturing process, the exhaust gas cooled after the dusts are collected, for example, the exhaust gas cooled to 40°C or lower is introduced into the NOx (nitrogen dioxide and the like) recovery step (1) to be brought into contact with water.

The NOx recovery step (1) is a recovery step using a NOx absorption and removal process with water.

Specifically, the exhaust gas cooled after the dust collection is brought into contact with water to bring NOx contained in the exhaust gas into contact with water, the NOx is absorbed in water, and the NOx is recovered as a nitrate/nitrite nitrogen-containing solution.

For example, the NOx can be converted into nitrate/nitrite nitrogen by indirectly recovering heat using a heat exchanger and reacting the NOx with water.

The NOx in the cement exhaust gas to be recovered has an equilibrium relationship as shown in the following formula (A).

2NO → 2NO₂ ←→ N₂O₄ ... (A)

In addition, as shown in the following reaction formula (B), in a case where the NO₂ comes into contact with water, nitrate/nitrite nitrogen is generated.

2NO₂ + H₂O → HNO₃ + HNO₂ ... (B)

(N₂O₄ + H₂O → HNO₃ + HNO₂)

A volume ratio of ((HNO₃ + HNO₂)/containing solution) in the obtained nitrate/nitrite nitrogen-containing solution is not particularly limited, but for example, 0.01 to 0.15, and preferably 0.01 to 0.08 can be exemplified.

As described above, in the NOx recovery step, water is used as the NOx absorbing liquid; and since a chemical liquid such as a chemical product is not used, the cost can be kept low and the containing solution can be recovered and reused as a nitric acid solution.

In addition, in the present invention, it is not necessary to newly provide a step of oxidizing nitrous acid to nitric acid, for example, a step of converting nitrous acid into nitric acid with ozone or the like, and both nitrous acid and nitric acid can be reduced in the following reduction step (2), whereby the reaction process can be shortened.

Next, all or a part of the nitrate/nitrite nitrogen-containing solution produced in the above-described NOx recovery step (1) is introduced into the following reduction reaction step (2) (arrow of the main manufacturing steps in FIG. 1) to be treated.

The nitrate/nitrite nitrogen-containing solution to be introduced into the reduction reaction step (2) can be all or a part of the nitrate/nitrite nitrogen-containing solution produced in the NOx recovery step (1); and in a case of being a part, the remaining nitrate/nitrite nitrogen-containing solution can be introduced into the following neutralization step (5).

As an example, a nitric acid-nitrous acid nitrogen-containing liquid with 40% by volume, preferably 38% by volume and more preferably 35% by volume, in the nitrate/nitrite nitrogen-containing solution produced in the above-described NOx recovery step (1) can be separated separately without being introduced into the following reduction reaction step (2), and then can be introduced into the following neutralization step (5).

The reduction reaction step (2) is a step of bringing a catalyst having a reducing action and the nitrate/nitrite nitrogen-containing solution into contact with each other under an acidic condition, for example, by adding sulfuric acid generated by bipolar membrane electrodialysis in the following catalyst production step (7) under an acidic condition, to react the catalyst with the nitrate/nitrite nitrogen-containing solution, thereby converting the nitrate/nitrite nitrogen in the nitrate/nitrite nitrogen-containing solution into ammonia.

As the catalyst having a reducing action, which is used in the reduction reaction step (2), a magnetic material which can reduce nitrate nitrogen to ammonia can be used; and examples thereof include a spinel ferrite-based material (R₁-Fe₂O₄), a hexagonal ferrite (R₂-Fe₁₂O₁₉), a garnet ferrite-based material (R₃-Fe₅O₁₂), and R₃-M-B.

Examples of R₁, R₂, R₃, and M in the above-described structural formulae include the following.
R₁: Fe, Mn, Ni, Cu, Zn
R₂: Ba, Sr, Pb
R₃: Sc, Y, La, Ce, Pr, Nd, Sm, Gd, Eu, Tb, Dy, Ho, Er, Tm, Yb, Lu
M: Fe, Fe-Co

In particular, as the catalyst having a reducing action, magnetite and/or reduced iron powder (for example, JIP 300R manufactured by JFE Steel Corporation) can be suitably used in the magnetic material, and any magnetite or reduced iron powder which can be commercially available can be used, or for example, magnetite prepared by effectively using waste heat gas discharged from a cement plant can also be used. In the present invention, it is desirable to use such magnetite prepared by using exhaust gas from a cement plant (catalyst production step (7)).

Here, unlike the exhaust gas, the waste heat gas means heat gas such as air which does not contain cement dust and the like, in which the heat gas is heated outside a cement kiln in a cement manufacturing process.

In order to prepare the magnetite which is a reducing catalyst used in the present invention, a magnetite obtained by reacting iron sulfate with sodium hydroxide (reaction formulae (D) and (E)) and a sodium sulfate aqueous solution is subjected to solid-liquid separation (catalyst production step (7)).

As the iron sulfate, commercially available iron sulfate can be used, and examples thereof include industrial ferrous iron sulfate (manufactured by SAKAI CHEMICAL INDUSTRY CO.,LTD.).

In addition, as the sodium hydroxide, commercially available sodium hydroxide can also be used, but in the present invention, for example, sodium hydroxide obtained by bipolar membrane electrodialysis (reaction formula (C)) described later is used. In addition, the sulfuric acid can be used in the reduction reaction step (2) as described above.

Na₂SO₄ + 2H₂O → 2NaOH + H₂SO₄ ... (C)

In the bipolar membrane electrodialysis, an aqueous solution containing sodium sulfate is subjected to electrodialysis (above reaction formula (C)) to generate sulfuric acid and sodium hydroxide. Such sodium sulfate is used for bipolar membrane electrodialysis by circulating sodium sulfate generated in the following reaction formula (D) in a case of preparing the magnetite.

In addition, the sulfuric acid obtained by such bipolar membrane electrodialysis can be used for making the reduction reaction step (2) under an acidic condition, and/or can be reacted with unreacted sodium hydroxide after the preparation of magnetite to form sodium sulfate; and can be used in a circulatory manner together with the sodium sulfate aqueous solution which has been subjected to solid-liquid separation in the catalyst production step (7) by the above-described electrodialysis.

In addition, sodium hydroxide obtained by the bipolar membrane electrodialysis is used for the preparation of magnetite which reacts with the iron sulfate shown in the following reaction formula (D).

In this way, in the catalyst production step (7), sodium hydroxide can be used by being circulated.

The magnetite is produced by a ferrite method of the following reaction formulae (D) and (D) using the iron sulfate and the sodium hydroxide produced by the reaction formula (C).

Such a production process is a process in which the iron sulfate and the sodium hydroxide are reacted at, for example, pH 8 to 13 at 200°C to 250°C using the waste heat gas.

FeSO₄ + 2NaOH → Fe(OH)₂ + Na₂SO₄ ... (D)

3Fe(OH)₂ → Fe₃O₄ + H₂ + 2H₂O ... (E)

The obtained magnetite is used as a catalyst having a reducing action in the reduction reaction step (2).

In addition, in a case where unreacted sodium hydroxide remains after the preparation of magnetite by the above reaction formulae (D) and (E), the unreacted sodium hydroxide can be reacted with sulfuric acid obtained by the above-described bipolar membrane electrodialysis (reaction formula (C)) to generate sodium sulfate, and the sodium sulfate can be subjected to a bipolar membrane electrodialysis treatment together with the sodium sulfate generated by the reaction formula (D).

As an example of the outline of the production process of the magnetite, the following can be exemplified.

The iron sulfate is contained in a sodium hydroxide aqueous solution, and the precipitate generated by the above reaction formulae (D) and (E) is filtered by a filter press; water is evaporated and dried using waste heat gas from a cement plant, for example, dried at 70°C for approximately 30 minutes; and the resultant is crushed with a coarse crusher such as a hammer mill, collected by magnetic separation, and sieved with a vibrating screen to adjust the particle size to 0.5 mm to 2 mm, whereby a magnetite crushed material can be prepared.

As a chemical composition of the obtained magnetite, the obtained magnetite can be subjected to component analysis using a fluorescence X-ray measuring device (PRIMUS IV manufactured by Rigaku Holdings Corporation), and for example, a magnetite crushed material having the following composition can be prepared.

Fe: 68.3%, O: 28.6%, C: 1.2%, Mn: 1.1%, Al: 0.3%, S: 0.3%, Si: 0.2%

In addition, the obtained magnetite crushed material is further finely crushed, and then subjected to X-ray diffraction measurement using a powder X-ray diffractometer (manufactured by Panalytical Ltd, X'Part Powder) under measurement conditions of measurement range: 20 = 10° to 70°, step size: 0.017°, scan speed: 0.1012°/s, voltage: 45 kV, and current: 40 mA; and it can be confirmed that the crushed product is magnetite.

Specifically, the X-ray diffraction profile can be analyzed using software for crystal structure analysis (manufactured by Panalytical Ltd, X'Part High Score Plus version 2.1b) provided in the above-described powder X-ray diffractometer, and it is possible to confirm that the powder is magnetite.

In addition, hydrogen generated from the above-described reactions (D) to (E) can be used in a circulatory manner as a heat source of a burner in a case of preparing cement.

In the above-described reduction reaction step (2), as described above, the nitrate/nitrite nitrogen is reacted with the catalyst having a reducing action, such as the magnetite produced in the above-described catalyst production step (7), under an acidic condition to produce ammonia.

For example, all or a part of the nitrate/nitrite nitrogen is converted into ammonia by charging the catalyst having a reducing action, such as the above-described magnetite, into the nitrate/nitrite nitrogen-containing solution introduced from the NOx recovery step and carrying out a reduction reaction under an acidic condition.

As an example, the term "part" can be exemplified by converting 90% by volume, preferably 93% by volume, of the nitrate/nitrite nitrogen into ammonia.

In addition, in order to efficiently performing the reduction reaction, it is desirable to maintain an equilibrium state so that oxygen does not enter the nitrate/nitrite nitrogen-containing solution; and examples thereof include performing the reaction in a sealed state or performing the reaction in an inert atmosphere.

As an example, for example, the magnetite obtained in the above-described catalyst production step (7) and the reduced iron are introduced into the nitrate/nitrite nitrogen-containing solution introduced into the reduction reaction step at a mass ratio of 2:1, and the following reduction reaction is carried out for example for 1 to 10 hours, preferably 3 to 10 hours, while stirring the mixture at room temperature and under an acidic condition, such that a pH of the nitrate/nitrite nitrogen-containing solution is set to 1.0 to 6.0, preferably 1.0 to 4.0 and more preferably 1.0 to 2.0.

The reduction reaction is represented by the following formulae (F) and (G).

HNO₃ + 4Fe + 5H₂O → NH₃ + 4Fe(OH)₂ ... (F)

HNO₂ + 3Fe + 4H₂O → NH₃ + 3Fe(OH)₂ ... (G)

As an additive for promoting the reduction reaction of the reaction formulae (F) and (G) under the acidic condition, any additive can be used as long as it can adjust the pH of the aqueous solution to be acidic and does not affect the treatment of the present invention; and for example, hydrochloric acid, sulfuric acid, nitric acid, or the like is applicable. It is possible to use nitric acid, and it is possible to use sulfuric acid obtained by the electrodialysis in the above-described catalyst production step (7), which is desirable from the viewpoint of recycling.

It is more preferable that, in the above-described reduction treatment, ORP is continuously measured with an ORP electrode, and the ORP is adjusted to be -500 mV to -200 mV, preferably -500 mV to -400 mV, so that the reduction treatment proceeds effectively.

Next, the ammonia and the nitrate/nitrite nitrogen-containing solution obtained in the above-described reduction reaction step (2) are introduced into the ammonia recovery step (3) (arrow of the main manufacturing steps in FIG. 1).

Next, the ammonia and the nitrate/nitrite nitrogen-containing solution are adjusted to a pH of 8.0 to 14.0, preferably 10.0 to 14.0, with a basic agent, and then distilled using waste heat gas from a cement plant, and the ammonia is heated and vaporized to be recovered (ammonia recovery step (3)).

The waste heat gas can also be applied to the vaporization of ammonia in the ammonia recovery step (3) by circulating the waste heat gas used for heating and concentrating the ammonium nitrate prepared in the following neutralization step (5) to precipitate crystals.

For the recovery of ammonia by heating and vaporization, for example, a stripping method is adopted, and it is desirable to set the heating temperature to 50°C to 70°C.

In addition, a part of the vaporized ammonia is introduced into the following neutralization step (5), and the remaining vaporized ammonia can be used for improving purity of ammonium nitrate by reacting with the nitrate/nitrite nitrogen remaining in the ammonium nitrate obtained by heating and concentrating the ammonium nitrate in the following neutralization step (5).

As the above-described basic agent, any basic agent can be used as long as it can adjust the pH of the aqueous solution to be basic and does not affect the treatment of the present invention, and examples thereof include sodium hydroxide, calcium hydroxide, potassium hydroxide, and magnesium hydroxide. Sodium hydroxide can be preferably used, and for example, sodium hydroxide obtained by the electrodialysis in the above-described catalyst production step (7) can be used, which is desirable from the viewpoint of recycling.

In addition, the iron (II) hydroxide which is a residue generated by the above reaction formulae (F) and (G) is introduced into the ammonia recovery step (3) together with the ammonia and the nitrate/nitrite nitrogen-containing solution; and after the above-described ammonia recovery step (3), the residue is subjected to solid-liquid separation, and the iron hydroxide from the above-described reduction reaction step (2) and the unused residue of the nitrate/nitrite nitrogen-containing solution are subjected to solid-liquid separation (solid-liquid separation step (4)).

The iron hydroxide separated in the above-described solid-liquid separation step (4) is oxidized to be iron oxide-hydroxide by being exposed to air (see the following reaction formula (H)), and the iron oxide-hydroxide can be reused as a cement raw material.

4Fe(OH)₂ + O₂ → 4FeO(OH) + 2H₂O ... (H)

Next, a part of the ammonia recovered by the vaporization in the above-described ammonia recovery step (3), the nitrate/nitrite nitrogen-containing solution separated in the above-described solid-liquid separation step (4), and the remaining nitrate/nitrite nitrogen-containing solution obtained in the above-described nitrogen dioxide recovery step (1) and not introduced into the above-described reduction reaction step (2) are introduced into the neutralization step (5) to be brought into contact with each other to produce ammonium nitrate (for example, a purity of 78%).

In such a neutralization step (5), a solution containing the produced ammonium nitrate and the excess nitrate/nitrite nitrogen not used for the production of ammonium nitrate is obtained.

For example, the reaction between the nitrate nitrogen and the ammonia is represented by the following formula (I), and for example, an ammonium nitrate solution having a concentration of approximately 78% can be produced.

HNO₃ + NH₃ → NH₄NO₃ ... (I)

The ammonium nitrate-containing solution obtained as described above is distilled by heating distillation using waste heat gas as necessary, for example, adjusted to 170°C to 180°C, thereby obtaining a suspension (for example, a purity of 98%) in which ammonium nitrate is concentrated, and volatilizing the residual nitrate/nitrite nitrogen (HNO₃ + HNO₂). It is desirable that the volatilized HNO₃ and HNO₂ are used by being circulated in the above-described neutralization step (5).

The remaining vaporized ammonia gas which has not been introduced in the above-described neutralization step (5) is added to the concentrated ammonium nitrate-containing suspension. By adding such an ammonia gas, the suspension (concentrated ammonium nitrate) becomes weakly alkaline, and by a neutralization reaction with the nitrate/nitrite nitrogen (HNO₃ + HNO₂) remaining in the concentrated ammonium nitrate, the purity of ammonium nitrate can be increased (for example, approximately 100%); and by cooling the concentrated ammonium nitrate, crystals of ammonium nitrate are precipitated and isolated.

It is preferable that such treatment is performed before the following granulation step (6).

In addition, the above-described waste heat gas can be used for the vaporization of ammonia in the above-described ammonia recovery step (3) after the ammonium nitrate is concentrated and precipitated.

Next, after the ammonium nitrate is isolated as described above, granular ammonium nitrate is produced by any granulator available on the market (granulation step (6)).

In such a granulation step (6), a step of mixing the solid ammonium nitrate with light oil or the like to produce, for example, an explosive or a blasting material can be performed.

By the treatment method according to the present invention, the nitrogen dioxide contained in the cement exhaust gas can be converted into ammonium nitrate and used, the content of the nitrogen dioxide contained in the cement exhaust gas can be sufficiently reduced, and the denitrification can be effectively carried out. Therefore, the environmental burden can be reduced even in the production of a reducing catalyst used in the process of producing ammonium nitrate, the waste heat gas in the case of cement manufacturing can be used, and a circulation cycle in which the residue obtained by the treatment method according to the present invention can be effectively used in the case of cement manufacturing is formed.

### Industrial Applicability

Since it is possible to denitrify the nitrogen dioxide in the waste gas discharged from a cement plant with high efficiency, and a circulation cycle which is environmentally excellent can be obtained, the treatment method according to the present invention can be effectively applied to a cement plant which manufactures cement.

## Claims

1. A method for producing ammonium nitrate using nitrogen dioxide in a cement exhaust gas, the method comprising:
a nitrogen dioxide recovery step (1) of bringing nitrogen dioxide in a cement exhaust gas into contact with water and absorbing the nitrogen dioxide in the water to recover the nitrogen dioxide as a nitrate/nitrite nitrogen-containing solution;
a reduction reaction step (2) of bringing reduced iron and magnetite into contact with all or a part of the nitrate/nitrite nitrogen-containing solution obtained in the nitrogen dioxide recovery step (1) under an acidic condition to produce iron hydroxide and ammonia;
an ammonia recovery step (3) of distilling and vaporizing the ammonia produced in the reduction reaction step (2) using a waste heat gas from a cement manufacturing process to recover the ammonia;
a solid-liquid separation step (4) of separating a residue after recovering the ammonia in the ammonia recovery step (3) into a solid and a liquid, and by which the residue is separated into the iron hydroxide of the reduction reaction step (2) which has passed through the ammonia recovery step (3), and unused nitrate/nitrite nitrogen-containing solution in the residue;
a neutralization step (5) of bringing the nitrate/nitrite nitrogen-containing solution separated in the solid-liquid separation step (4) and the nitrate/nitrite nitrogen-containing solution, which is a remainder obtained in the nitrogen dioxide recovery step (1) and not introduced into the reduction reaction step (2), into contact with the ammonia vaporized and recovered in the ammonia recovery step (3) to prepare ammonium nitrate; and
a catalyst production step (7) of preparing the magnetite used in the reduction reaction step (2) by reacting iron sulfate with a sodium hydroxide aqueous solution and then separating the produced magnetite and sodium sulfate aqueous solution into a solid and a liquid, separating the sodium sulfate aqueous solution by electrodialysis into sodium hydroxide and sulfuric acid, and using the obtained sodium hydroxide in a circulatory manner in the preparation of the magnetite by reacting the sodium hydroxide with the iron sulfate.

2. The method for producing ammonium nitrate using nitrogen dioxide in a cement exhaust gas according to Claim 1, wherein the sulfuric acid obtained in the catalyst production step (7) is used for the acidic condition in the reduction reaction step (2), and/or used in a circulatory manner by being reacted with an unreacted sodium hydroxide after the preparation of the magnetite to produce sodium sulfate, and the sodium sulfate is used in the electrodialysis together with the sodium sulfate aqueous solution subjected to the solid-liquid separation in the catalyst production step (7).

3. The method for producing ammonium nitrate using nitrogen dioxide in a cement exhaust gas according to Claim 1 or 2, wherein hydrogen produced during the preparation of the magnetite in the catalyst production step (7) is used in a circulatory manner as a combustion raw material in cement manufacturing.

4. The method for producing ammonium nitrate using nitrogen dioxide in a cement exhaust gas according to Claim 1 or 2, further comprising:
a granulation step (6) of granulating the ammonium nitrate prepared in the neutralization step (5).

5. The method for producing ammonium nitrate using nitrogen dioxide in a cement exhaust gas according to Claim 1 or 2, wherein the iron hydroxide separated in the solid-liquid separation step (4) is exposed to air to be iron oxide-hydroxide, and the iron oxide-hydroxide is used as a cement raw material.

6. The method for producing ammonium nitrate using nitrogen dioxide in a cement exhaust gas according to Claim 1, wherein the ammonium nitrate prepared in the neutralization step (5) is contained in an ammonium nitrate and nitrate/nitrite nitrogen-containing solution, the solution is heated and distilled at 170°C to 180°C using a waste heat gas to concentrate the ammonium nitrate, the remaining nitrate/nitrite nitrogen is vaporized and circulated in the neutralization step (5), a part of the ammonia vaporized in the ammonia recovery step (3) is added to the concentrated ammonium nitrate to be reacted with an unreacted nitrate/nitrite nitrogen mixed with the concentrated ammonium nitrate for improving a purity of the ammonium nitrate, and the high-purity ammonium nitrate is cooled to obtain crystallized ammonium nitrate.
